# EUROPEAN PATENT SPECIFICATION

(11) **EP 3 144 123 B1**
(45) Date of publication and mention of the grant of the patent: **28.08.2019**
(21) Application number: 16182236.6
(22) Date of filing: 01.08.2016
(51) Int. Cl.: B29C 45/77, B29C 45/50

(54) **INJECTION MOLDING MACHINE**
SPRITZGIESSMASCHINE
MACHINE DE MOULAGE À INJECTION

(30) Priority: 31.08.2015 JP 2015171519
(43) Date of publication of application: 22.03.2017
(73) Proprietor: SUMITOMO HEAVY INDUSTRIES, LTD., Tokyo 141-6025 (JP)
(72) Inventor: MIYATAKE, Tsutomu, Yokosuka-shi, Kanagawa 237-8555 (JP); SATO, Yuji, Yokosuka-shi, Kanagawa 237-8555 (JP)
(74) Representative: Louis Pöhlau Lohrentz

(56) References cited:
- EP-A1- 1 362 684
- EP-A1- 2 468 475
- DE-A1-102011 107 198
- JP-A- H1 110 694
- JP-A- H06 339 961

## Description

### BACKGROUND OF THE INVENTION

### Field of the Invention

Certain embodiment of the present invention relates to relates to an injection molding machine.

### Description of Related Art

Injection molding machines include a mold clamping unit which performs closing, clamping, and opening of a mold unit, an injection unit which fills the mold unit with a molding material, a controller which controls the mold clamping unit or the injection unit, or the like, see for example document EP 2 468 475 A1.

The injection unit includes a cylinder, a nozzle, a screw, a plasticizing motor, an injection motor, and a pressure detector.

The cylinder heats the molding material which is supplied to the inner portion thereof. The nozzle is provided on a front end portion of the cylinder and is pressed by the mold unit. The screw is disposed to be rotatable and to be movable forward and backward in the cylinder.

The plasticizing motor rotates the screw, and the screw feeds the molding material to the front side along spiral grooves of the screw. The molding material is gradually melted while being fed to the front side. The screw is moved backward according to accumulation of a liquid molding material in the front portion of the cylinder.

The injection motor moves the screw forward and backward. According to the forward movement of the screw, the injection motor injects the liquid molding material accumulated on the front side of the screw from the nozzle and fills the mold unit with the liquid molding material.

The pressure detector is disposed between the injection motor and the screw, and detects a pressure which is applied from the molding material to the screw, a back pressure with respect to the screw, or the like (for example, refer to Patent Document 1). The pressure which is applied from the molding material to the screw corresponds to a pressure which is applied from the screw to the molding material.

For example, the controller controls a drive source such as an injection motor such that a detected value of the pressure detector becomes a set value in a holding pressure process. For example, as the drive source, a hydraulic cylinder or the like may be used in addition to the injection motor.

[Patent Document 1] International Publication No. WO 2005/037519

The pressure detector is disposed behind the screw, and is far from the liquid molding material accommodated in the front portion of the screw. Accordingly, a proportion of noise due to a mechanical resistance included in the detected value of the pressure detector is large. For example, as the mechanical resistance, there is a sliding friction or the like.

In a case where the detected values of the pressure detector are the same as each other, if the mechanical resistance varies, a pressure applied to the molding material varies. In the related art, since the proportion of the noise due to the mechanical resistance included in the detected value of the pressure detector is large, variation in quality of a molding product is high.

European Patent Application EP 2 468 475 A1 describes a plasticizing device with a feeder, a screw configured to move axially in a cylinder, and a pressure sensor configured to detect a pressure at the predefined position in the cylinder.

Japanese Patent Application JP H11 10694 A describes that the resin viscosity is calculated from the resin pressure before and behind a check ring and compared with a reference viscosity to determine quality or to control molding conditions.

### SUMMARY OF THE INVENTION

The present invention is made in consideration of the above-described circumstances, and a main object thereof is to provide an injection molding machine capable of stabilizing the quality of a molding product.

### [Means for Solving the Problem]

In order to achieve the above object, according to an aspect of the present invention, there is provided an injection molding machine, including: a cylinder which heats a molding material supplied from a supply port to the inner portion of the cylinder; a screw which is movable forward and backward and is rotatable in the cylinder; a drive source which moves the screw forward and backward; a controller which controls the drive source; a check valve which is provided on a front end portion of the screw and prevents backflow of the molding material from the front of the screw; and a liquid pressure detector which detects a liquid pressure of a melted molding material on the rear side of the check valve and the front side of the supply port, in which the controller controls the drive source on the basis of the liquid pressure which is detected by the liquid pressure detector.

According to the aspect of the present invention, an injection molding machine capable of stabilizing the quality of a molding product is provided.

### BRIEF DESCRIPTION OF THE DRAWINGS

Fig. 1 is a view showing an injection molding machine according to an embodiment.
Fig. 2 is a view showing a main portion of the injection molding machine according to the embodiment.

### DETAILED DESCRIPTION OF THE INVENTION

Hereinafter, an embodiment of the present invention is described with reference to the drawings. However, in each drawing, the same or corresponding reference numerals are assigned to the same or corresponding configurations, and descriptions thereof are omitted.

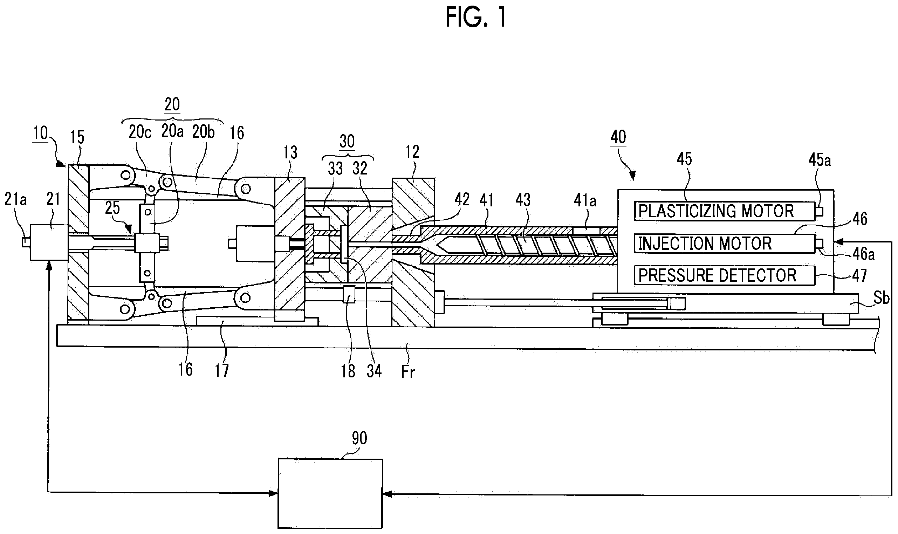

Fig. 1 is a view showing an injection molding machine according an embodiment. The injection molding machines includes a frame Fr, a mold clamping unit 10, an injection unit 40, and a controller 90.

First, a mold clamping unit 10 is described. In the descriptions of the mold clamping unit 10, a movement direction (right direction in Fig. 1) of a movable platen 13 when a mold is closed is defined as a front side, and a movement direction (left direction in Fig. 1) of the movable platen 13 when the mold is open is defined as a rear side.

The mold clamping unit 10 performs opening, clamping, and closing of a mold unit 30. The mold clamping unit 10 includes a stationary platen 12, the movable platen 13, a support platen 15, a tie bar 16, a toggle mechanism 20, a mold clamping motor 21, and a movement conversion mechanism 25.

The stationary platen 12 is fixed to the frame Fr. A stationary mold 32 is attached to a surface of the stationary platen 12 facing the movable platen 13.

The movable platen 13 is movable along a guide (for example, guide rail) 17 which is placed on the frame Fr, and is movable forward and backward with respect to the stationary platen 12. A movable mold 33 is attached to a surface of the movable platen 13 facing the stationary platen 12.

By moving the movable platen 13 forward and backward with respect to the stationary platen 12, opening, clamping, and closing of the mold are performed. The mold unit 30 is configured of the stationary mold 32 and the movable mold 33.

The support platen 15 is connected so as to be separated from the stationary platen 12, and is placed to be movable on the frame Fr in mold opening and closing directions. In addition, the support platen 15 may be movable along a guide which is placed on the frame Fr. The guide of the support platen 15 may be also used as the guide 17 of the movable platen 13.

In addition, in the present embodiment, the stationary platen 12 is fixed to the frame Fr, and the support platen 15 is movable in the mold opening and closing directions with respect to the frame Fr. However, the support platen 15 is fixed to the frame Fr, and the stationary platen 12 may be movable in the mold opening and closing directions with respect to the frame Fr.

The stationary platen 12 and the support platen 15 are connected to each other at intervals by the tie bar 16. A plurality of tie bars 16 may be used. The tie bars 16 are parallel in the mold opening and closing directions, and extend according to a mold clamping force. A mold clamping force detector 18 is provided in at least one tie bar 16. The mold clamping force detector 18 may be a strain gauge type detector, and detects the mold clamping force by detecting strain of the tie bar 16.

In addition, the mold clamping force detector 18 is not limited to the strain gauge type detector, and may be a piezoelectric type detector, a capacitance type detector, a hydraulic type detector, an electromagnetic type detector, or the like, and the attachment position of the mold clamping force detector 18 is also not limited to the tie bar 16.

The toggle mechanism 20 is provided between the movable platen 13 and the support platen 15. The toggle mechanism 20 is configured of a crosshead 20a, a plurality of links 20b and 20c, or the like. One link 20b is attached so as to be oscillated to the movable platen 13, and the other link 20c is attached so as to be oscillated to the support platen 15. The links 20b and 20c are bendably/strechably connected by pins or the like. By moving the crosshead 20a forward and backward, the plurality of links 20b and 20c are bent and stretched, and the movable platen 13 moves forward and backward with respect to the support platen 15.

The mold clamping motor 21 is attached to the support platen 15, moves the crosshead 20a forward and backward, and moves the movable platen 13 forward and backward. The movement conversion mechanism 25, which converts a rotational motion of the mold clamping motor 21 into a linear motion and transmits the linear motion to the crosshead 20a, is provided between the mold clamping motor 21 and the crosshead 20a. For example, the movement conversion mechanism 25 is a ball screw mechanism. The speed of the crosshead 20a is detected by an encoder 21a of the mold clamping motor 21, or the like.

The operation of the mold clamping unit 10 is controlled by the controller 90. The controller 90 controls a mold closing process, a mold clamping process, a mold opening process, or the like.

In the mold closing process, by driving the mold clamping motor 21 and moving the movable platen 13 forward, the movable mold 33 comes into contact with the stationary mold 32.

In the mold clamping process, by further driving the mold clamping motor 21, a mold clamping force is generated. When the mold is clamped, a cavity space 34 is formed between the movable mold 33 and the stationary mold 32, and the cavity space 34 is filled with a liquid molding material. The molding material inside the cavity space 34 is solidified and becomes a molding product.

In the mold opening process, by driving the mold clamping motor 21 and moving the movable platen 13 backward, the movable mold 33 is separated from the stationary mold 32.

In addition, the mold clamping unit 10 of the present embodiment has the mold clamping motor 21 as a drive source. However, instead of the mold clamping motor 21, the mold clamping unit 10 may have a hydraulic cylinder. Moreover, the mold clamping unit 10 may have a mold opening-closing linear motor, and may have a mold clamping electromagnet.

Next, an injection unit 40 is described. Different from the descriptions of the mold clamping unit 10, in descriptions of the injection unit 40, a movement direction (left direction in Fig. 1) of a screw 43 during filling is referred to as a front side, and a movement direction (right direction in Fig. 1) of the screw 43 during plasticizing is referred to as a rear side.

The injection unit 40 is installed on a slide base Sb which is movable forward and backward with respect to the frame Fr, and is movable forward and backward with respect to the mold unit 30. The injection unit 40 is touched on the mold unit 30, and fills the inner portion of the mold unit 30 with the molding material. For example, the injection unit 40 includes a cylinder 41, a nozzle 42, the screw 43, a plasticizing motor 45, an injection motor 46, and a pressure detector 47.

The cylinder 41 heats the molding material which is supplied from a supply port 41a to the inner portion of the cylinder 41. The supply port 41a is formed on the rear portion of the cylinder 41. A heat source such as a heater is provided on the outer circumference of the cylinder 41.

The nozzle 42 is provided on the front end portion of the cylinder 41, and is pressed by the mold unit 30.

The screw 43 is disposed in the cylinder 41 so as to be rotatable and movable forward and backward.

The plasticizing motor 45 rotates the screw 43 to feed the molding material forward along spiral grooves of the screw 43. The molding material is gradually melted by heat of the cylinder 41 while being fed forward. The liquid molding material is fed to the front portion of the screw 43 and is accumulated in the front portion of the cylinder 41, and thus, the screw 43 moves backward.

The injection motor 46 moves the screw 43 forward and backward. The injection motor 46 moves the screw 43 forward, and thus, the liquid molding material accumulated in the front side of the screw 43 is injected from the cylinder 41, and the inner portion of the mold unit 30 is filled with the liquid molding material. Thereafter, the injection motor 46 presses the screw 43 forward, and applies a pressure to the molding material inside the mold unit 30. Accordingly, insufficient molding materials can be replenished. A movement conversion mechanism which converts a rotational motion of the injection motor 46 into a liner motion of the screw 43 is provided between the injection motor 46 and the screw 43.

For example, the pressure detector 47 is disposed between the injection motor 46 and the screw 43, and detects a pressure which is applied from the molding material to the screw 43, a back pressure with respect to the screw 43, or the like. The pressure which is applied from the molding material to the screw 43 corresponds to the pressure which is applied from the screw 43 to the molding material.

The operation of the injection unit 40 is controlled by the controller 90. The controller 90 controls a filling process, a holding pressure process, a plasticizing process, or the like.

In the filling process, the injection motor 46 is driven so as to move the screw 43 forward at a set speed, and the inner portion of the mold unit 30 is filled with the liquid molding material accumulated in the front side of the screw 43. For example, the position or the speed of the screw 43 is detected by an encoder 46a of the injection motor 46, or the like. If the position of the screw 43 reaches a predetermined position, switching from the filling process to the holding pressure process (so called V/P switching) is performed.

In addition, in the filing process, after the position of the screw 43 reaches a predetermined position, the screw 43 may temporarily stop at the predetermined position, and thereafter, the V/P switching may be performed. Immediately before the V/P switching, instead of stopping the screw 43, the screw 43 may move forward or may move backward at a very slow speed.

In the holding pressure process, the injection motor 46 is driven so as to press the screw 43 forward at a set pressure, and a pressure is applied to the molding material inside the mold unit 30. Accordingly, insufficient molding materials can bereplenished. For example, thepressureof the moldingmaterial is detected by the pressure detector 47. In the holding pressure process, the molding material inside the mold unit 30 is gradually cooled, and when the holding pressure process is completed, the inlet of the cavity space 34 is closed by the solidified molding material. This state is referred to as a gate seal, and a backflow of the molding material from the cavity space 34 is prevented. After the holding pressure process, a cooling process starts. In the cooling process, solidification of the molding material inside the cavity space 34 is performed. In order to shorten a molding cycle, the plasticizing process may be performed during the cooling process.

In the plasticizing process, the plasticizing motor 45 is driven so as to rotate the screw 43 at a set rotating speed, and the screw 43 feeds the molding material forward along the spiral grooves of the screw 43. According to this, the molding material is gradually melted. The screw 43 moves backward as the liquid molding material is fed to the front side of the screw 43 and is accumulated in the front portion of the cylinder 41. For example, the rotating speed of the screw 43 is detected by an encoder 45a of the plasticizing motor 45.

In the plasticizing process, in order to restrict an abrupt rearward movement of the screw 43, the injection motor 46 may be driven so as to apply a set back pressure to the screw 43. For example, the back pressure with respect to the screw 43 is detected by the pressure detector 47. If the screw 43 moves backward to the predetermined position and a predetermined amount of the molding materials is accumulated in the front side of the screw 43, the plasticizing process ends.

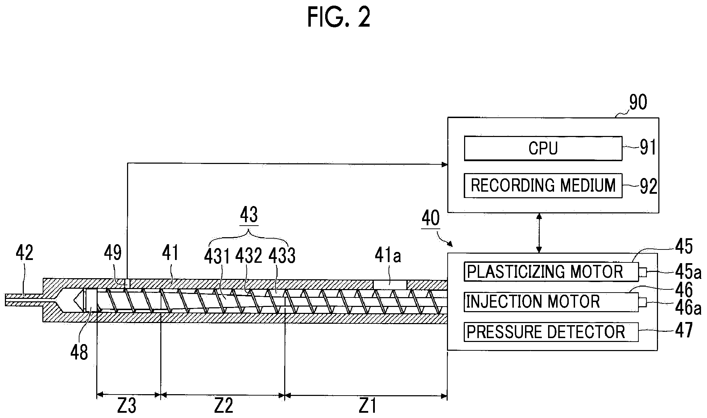

As shown in Fig. 2, the controller 90 includes a central processing unit (CPU) 91, and a recording medium 92 such as a memory. By carrying out a program stored in the recording medium 92 using the CPU 91, the controller 90 controls the mold clamping unit 10, the injection unit 40, or the like.

Fig. 2 is a view showing a main portion of the injection molding machine according to the embodiment. As shown in Fig. 2, the injection unit 40 includes a check valve 48 and a liquid pressure detector 49 in addition to the cylinder 41, the screw 43, the injection motor 46, or the like.

The screw 43 includes a rotary shaft 431, and spiral flights 432 which protrude from the outer circumference of the rotary shaft 431. Spiral grooves 433 are formed of the flights 432, and the molding material is fed from the rear side to the front side along the grooves 433.

The screw 43 includes a first section Z1, a second section Z2, and the third section Z3 in this order from the rear side toward the front side. The first section Z1 is a section in which solid phases of the molding material exist. The second section Z2 is a section in which both solid phases and liquid phases exist. The third section Z3 is a section in which liquid phases of the molding material exist.

The depth of each of the grooves 433 is deep in the first section Z1, is shallow in the third section Z3, and becomes gradually shallow from the rear side toward the front side in the second section Z2. In this case, the first section Z1 is referred to as a supply zone, the second section Z2 is referred to as a compression zone, and a third section Z3 is referred to as a metering zone.

In addition, the depth of the groove 433 may be constant.

The check valve 48 is provided on the front end portion of the screw 43, and prevents backflow of the molding material from the front side of the screw 43. The check valve 48 may be a general check valve, and for example, may be any check valve as long as the valve state is switched between a close state in which the passage of the molding material is closed and an open state in which the passage of the molding material is open. The switching of the state may be performed by moving the screw 43 forward and backward, or may be performed by a dedicated switching device. For example, the check valve 48 may be open during the plasticizing process, and may be closed during processes (before the plasticizing process starts or after the plasticizing process is completed) other than the plasticizing process.

The liquid pressure detector 49 detects a liquid pressure of a melted molding material on the rear of the check valve 48 and the front of the supply port 41a. Compared to the front side of the screw 43, the liquid pressure of the molding material is lower on the rear side of the check valve 48. Compared to a nozzle pressure detector which detects the pressure of the molding material in the nozzle 42 or an in-mold pressure detector which detects the pressure of the molding material in the mold unit 30, since the pressure detected by the liquid pressure detector 49 is lower, durability of the liquid pressure detector 49 is improved, and a manufacturing cost thereof decreases.

The detection position of the liquid pressure detector 49 may be the third section Z3 in which liquid phases dominantly exist and the second section Z2 in which both the liquid phases and the solid phases exist. However, preferably, the detection position is the third section Z3. Since the liquid phases dominantly exist in the third section Z3, unevenness in the liquid pressures decreases.

In addition, the number of the liquid pressure detector 49 is not one and may be two or more. In this case, any one of a plurality of liquid pressure detectors 49 may be selectively used. In addition, the plurality of liquid pressure detectors 49 may be used so as to be switched. Moreover, the plurality of liquid pressure detectors 49 may be simultaneously used.

The liquid pressure detector 49 may come into direct contact with the molding material, and may come into contact with the molding material in a state where a pressure transmission member such as a pin is interposed therebetween.

The detected value of the liquid pressure detector 49 is used to control the injection motor 46. The injection motor 46 corresponds to a drive source described in claims. In addition, the kinds of the drive sources may be various. For example, the drive source may be a hydraulic cylinder or the like.

The controller 90 controls the injection motor 46 on the basis of the liquid pressure detected by the liquid pressure detector 49. The liquid pressure detector 49 is closer to the molding material accumulated in the front portion of the screw 43 relative to the pressure detector 47. Accordingly, a proportion of noise due to a mechanical resistance included in the detected value of the liquid pressure detector 49 is small. Therefore, it is possible to prevent variation in quality of a molding product due to variation of the mechanical resistance.

The controller 90 controls the injection motor 46 such that the detected value of the liquid pressure detector 49 is the same as a set value of the liquid pressure detector 49. The set value of the liquid pressure detector 49 has a predetermined pattern, may be changed with time, and may not be changed with time. For example, as a specific control, there are the following controls (1) to (3). Any one of the following controls (1) to (3) may be singly used and a plurality of controls of the following controls (1) to (3) may be used so as to be switched.
(1) The controller controls the injection motor 46 such that the detected value of the liquid pressure detector 49 is the same as the set value of the liquid pressure detector 49 without using the detected value of the pressure detector 47.
(2) The controller corrects the detected value of the pressure detector 47 on the basis of the detected value of the liquid pressure detector 49 and controls the injection motor 46 such that the corrected detected value of the pressure detector 47 is same as the set value of the pressure detector 47. In the correction of the detected value, data is used, by which a relationship between the pressure detected by the pressure detector 47 and the pressure detected by the liquid pressure detector 49 is determined. The data is stored in the recording medium 92 in forms such as tables or expressions in advance.
(3) The controller 90 corrects the set value of the pressure detector 47 on the basis of the detected value of the liquid pressure detector 49, and controls the injection motor 46 such that the detected value of the pressure detector 47 is the same as the corrected set value of the pressure detector 47. In the correction of the set value, data is used, by which the relationship between the pressure detected by the pressure detector 47 and the pressure detected by the liquid pressure detector 49 is determined. The data is stored in the recording medium 92 in forms such as tables or expressions in advance.

The controller 90 controls the injection motor 46 on the basis of the detected value of the pressure detector 47 in advance, and may perform the manufacturing of the molding product and may store the detected value of the liquid pressure detector 49. This may be repeated in multiple times. Thereafter, the controller 90 can use the detected value of the liquid pressure detector 49 of the times at which a good molding product is obtained as the set value of the liquid pressure detector 49 of current time. In addition, the controller 90 can correct the detected value of the pressure detector 47 or the set value of the pressure detector 47 on the basis of a difference between the detected value of the liquid pressure detector 49 of the time at which a good molding product is obtained and the detected value of the liquid pressure detector 49 of current time.

The controller 90 may calculate the relationship between the pressure detected by the pressure detector 47 and the pressure detected by the liquid pressure detector 49. For example, this relationship is association with the detected value of the pressure detector 47 and the detected value of the liquid pressure detector 49 when a good molding product is obtained so as to be stored in the recording medium 92, and is obtained by preparing tables or expression. For example, in the preparation of the expressions, an approximation method such as a least squares method is used. The controller 90 can calculate the set value of the liquid pressure detector 49 from the set value of the pressure detector 47 input by a user using the obtained relationship. In addition, the controller 90 can correct the detected value of the pressure detector 47 or the set value of the pressure detector 47 using the obtained relationship.

In a case where the number of the liquid pressure detectors 49 is two or more, the controller 90 may search strength of a correlation between the detected value of the liquid pressure detector 49 and the detected value of the pressure detector 47 for each liquid pressure detector 49. The controller 90 can obtain the relationship using the detected value of the liquid pressure detector 49 and the detected value of the pressure detector 47 having the correlation of the greatest strength. In addition, the controller 90 may perform the correction using the obtained relationship and the detected value of the liquid pressure detector having the correlation of the greatest strength.

During the holding pressure process, the controller 90 detects the liquid pressure using the liquid pressure detector 49 and controls the injection motor 46 on the basis of the detected liquid pressure. For example, during the holding pressure process, the controller 90 may control the injection motor 46 such that the detected value of the liquid pressure detector 49 is the same as the set value of the liquid pressure detector 49. In addition, during the holding pressure process, the controller 90 may correct the detected value of the pressure detector 47 on the basis of the detected value of the liquid pressure detector 49, and may control the injection motor 46 such that corrected detected value of the pressure detector 47 is the same as the set value of the pressure detector 47. Moreover, during the holding pressure process, the controller 90 may correct the set value of the pressure detector 47 on the basis of the detected value of the liquid pressure detector 49, and the controller 90 may control the injection motor 46 such that the detected value of the pressure detector 47 is the same as the corrected set value of the pressure detector 47. It is possible to decrease variation in the pressures of the molding material filling the cavity space 34.

Moreover, during the plasticizing process, the controller 90 may detect the liquid pressure using the liquid pressure detector 49, and may control the injection motor 46 on the basis of the detected liquid pressure. For example, during the plasticizing process, the controller 90 may control the injection motor 46 such that the detected value of the liquid pressure detector 49 is the same as the set value of the liquid pressure detector 49. In addition, during the plasticizing process, the controller 90 may correct the detected value of the pressure detector 47 on the basis of the detected value of the liquid pressure detector 49, and the controller 90 may control the injection motor 46 such that the corrected detected value of the pressure detector 47 is the same as the set value of the pressure detector 47. Moreover, during the plasticizing process, the controller 90 may correct the set value of the pressure detector 47 on the basis of the detected value of the liquid pressure detector 49, and the controller 90 may control the injection motor 46 such that the detected value of the pressure detector 47 is the same as the corrected set value of the pressure detector 47. It is possible to decrease variation in the pressures of the molding material which is accumulated in the front portion of the cylinder 41.

In addition, the controller 90 may use the liquid pressure detected by the liquid pressure detector 49 so as to switch the process from the filling process to the holding pressure process . For example, when the detected value of the liquid pressure detector 49 reaches the set value during the filling process, the controller 90 may perform the switching from the filling process to the holding pressure process. In addition, during the filling process, the controller 90 may correct the detected value of the pressure detector 47 on the basis of the detected value of the liquid pressure detector 49, and when the corrected detected value reaches the set value, the controller 90 may perform the switching from the filling process to the holding pressure process. Inaddition, during the filling process, the controller 90 may correct the set value of the pressure detector 47 on the basis of the detected value of the liquid pressure detector 49, and when the detected value of the pressure detector 47 reaches the corrected set value, the controller 90 may perform the switching from the filling process to the holding pressure process.

Hereinbefore, the embodiment or the like of the injection molding machine is described. However, the present invention is not limited to the embodiment or the like, and various modifications or improvements may be applied within a scope of the present invention described in claims.

## Claims

1. An injection molding machine, comprising:
a cylinder (41) which heats a molding material supplied from a supplyport (41a) to the inner portion of the cylinder (41);
a screw (43) which is movable forward and backward and is rotatable in the cylinder (41);
a drive source (46) which moves the screw (43) forward and backward;
a controller (90) which controls the drive source (46);
a check valve (48) which is provided on a front end portion of the screw (43) and prevents backflow of the molding material from the front side of the screw (43); and
a liquid pressure detector (49) which detects a liquid pressure of a melted molding material on the rear side of the check valve (48) and the front side of the supply port (41a),
**characterized in that** the controller (90) is configured to control the drive source (46) on the basis of the liquid pressure which is detected by the liquid pressure detector (49) such that the detected value of the liquid pressure detector (49) is the same as a set value of the liquid pressure detector (49).

2. The injection molding machine according to claim 1, further comprising:
a pressure detector (47) which is provided between the screw (43) and the drive source (46), and
wherein the controller (90) is configured to correct a detected value of the pressure detector (47) on the basis of the detected value of the liquid pressure detector (49), and to control the drive source (46) such that the corrected detected value of the pressure detector (47) is the same as a set value of the pressure detector (49).

3. The injection molding machine according to any one of claims 1 to 2,
wherein a pressure detector (47) is provided between the screw (43) and the drive source (46), and
wherein the controller (90) is configured to correct the set value of the pressure detector (47) on the basis of the detected value of the liquid pressure detector (49), and to control the drive source (46) such that the detected value of the pressure detector (47) is the same as the corrected set value of the pressure detector (49).

4. The injection molding machine according to any one of claims 1 to 3,
wherein a pressure detector (47) is provided between the screw (43) and the drive source (46), and
wherein the controller (90) is configured to perform production of a molding product by controlling the drive source (46) on the basis of the detected value of the pressure detector (47), and to store the detected value of the liquid pressure detector (49).

5. The injection molding machine according to any one of claims 1 to 4,
wherein a pressure detector (47) is provided between the screw (43) and the drive source (46), and
wherein the controller (90) is configured to calculate a relationship between a pressure detected by the pressure detector (47) and a pressure detected by the liquid pressure detector (49).

6. The injection molding machine according to any one of claims 1 to 5,
wherein the controller (90) is configured to detect the liquid pressure using the liquid pressure detector (49) during a holding pressure process, and to control the drive source (46) on the basis of the detected liquid pressure.

7. The injection molding machine according to any one of claims 1 to 6,
wherein the controller (90) is configured to detect the liquid pressure using the liquid pressure detector (49) during a plasticizing process, and to control the drive source (46) on the basis of the detected liquid pressure.

8. The injection molding machine according to any one of claims 1 to 7,
wherein the controller (90) is configured to use the liquid pressure detected by the liquid pressure detector (49) to perform switching from a filling process to the holding pressure process .

## Patentansprüche

1. Spritzgießmaschine umfassend
einen Zylinder (41), welcher eine Formmasse erwärmt, die aus einer Zuführöffnung (41a) einem Innenabschnitt des Zylinders (41) zugeführt wird;
eine Schnecke (43), welche vorwärts und rückwärts beweglich ist und in dem Zylinder (41) drehbar ist;
eine Antriebsquelle (46), welche die Schnecke (43) vorwärts und rückwärts bewegt;
eine Steuereinrichtung (90), welche die Antriebsquelle (46) steuert;
ein Prüfventil (48), welches auf einem Stirnendabschnitt der Schnecke (43) vorgesehen ist und einen Rückfluss der Formmasse von der Stirnseite der Schnecke (43) verhindert; und
einen Flüssigkeitsdruckdetektor (49), welcher einen Flüssigkeitsdruck einer geschmolzenen Formmasse auf der Rückseite des Prüfventils (48) und der Stirnseite der Zuführöffnung (41a) detektiert,
**dadurch gekennzeichnet, dass** die Steuereinrichtung (90) konfiguriert ist, die Antriebsquelle (46) auf der Grundlage des Flüssigkeitsdrucks, welcher durch den Flüssigkeitsdruckdetektor (49) detektiert wird, zu steuern, derart, dass der detektierte Wert des Flüssigkeitsdruckdetektors (49) derselbe wie ein eingestellter Wert des Flüssigkeitsdruckdetektors (49) ist.

2. Spritzgießmaschine nach Anspruch 1 ferner umfassend
einen Druckdetektor (47), welcher zwischen der Schnecke (43) und der Antriebsquelle (46) vorgesehen ist, und
wobei die Steuereinrichtung (90) konfiguriert ist, einen detektierten Wert des Druckdetektors (47) auf der Grundlage des detektierten Wertes des Flüssigkeitsdruckdetektors (49) zu korrigieren und die Antriebsquelle (46) derart zu steuern, dass der korrigierte, detektierte Wert des Druckdetektors (47) derselbe wie ein eingestellter Wert des Druckdetektors (49) ist.

3. Spritzgießmaschine nach einem der Ansprüche 1 bis 2,
wobei ein Druckdetektor (47) zwischen der Schnecke (43) und der Antriebsquelle (46) vorgesehen ist, und
wobei die Steuereinrichtung (90) konfiguriert ist, den eingestellten Wert des Druckdetektors (47) auf der Grundlage des detektierten Wertes des Flüssigkeitsdruckdetektors (49) zu korrigieren und die Antriebsquelle (46) derart zu steuern, dass der detektierte Wert des Druckdetektors (47) derselbe wie der korrigierte, eingestellte Wert des Druckdetektors (49) ist.

4. Spritzgießmaschine nach einem der Ansprüche 1 bis 3,
wobei ein Druckdetektor (47) zwischen der Schnecke (43) und der Antriebsquelle (46) vorgesehen ist, und
wobei die Steuereinrichtung (90) konfiguriert ist, eine Produktion eines Spritzgießerzeugnisses durch Steuerung der Antriebsquelle (46) auf der Grundlage des detektierten Wertes des Druckdetektors (47) durchzuführen, und den detektierten Wert des Flüssigkeitsdruckdetektors (49) zu speichern.

5. Spritzgießmaschine nach einem der Ansprüche 1 bis 4,
wobei ein Druckdetektor (47) zwischen der Schnecke (43) und der Antriebsquelle (46) vorgesehen ist und
wobei die Steuereinrichtung (90) konfiguriert ist, eine Relation zwischen einem Druck, der durch den Druckdetektor (47) detektiert wird, und einem Druck, der durch den Flüssigkeitsdruckdetektor (49) detektiert wird, zu berechnen.

6. Spritzgießmaschine nach einem der Ansprüche 1 bis 5,
wobei die Steuereinrichtung (90) konfiguriert ist, den Flüssigkeitsdruck unter Verwendung des Flüssigkeitsdruckdetektors (49) während eines Druckhalteprozesses zu detektieren und die Antriebsquelle (46) auf der Grundlage des detektierten Flüssigkeitsdrucks zu steuern.

7. Spritzgießmaschine nach einem der Ansprüche 1 bis 6,
wobei die Steuereinrichtung (90) konfiguriert ist, den Flüssigkeitsdruck unter Verwendung des Flüssigkeitsdruckdetektors (49) während eines Plastifizierungsprozesses zu detektieren und die Antriebsquelle (46) auf der Grundlage des detektierten Flüssigkeitsdrucks zu steuern.

8. Spritzgießmaschine nach einem der Ansprüche 1 bis 7,
wobei die Steuereinrichtung (90) konfiguriert ist, den Flüssigkeitsdruck, der durch den Flüssigkeitsdruckdetektor (49) detektiert wird, zu verwenden, um ein Umschalten von einem Füllprozess auf den Druckhalteprozess durchzuführen.

## Revendications

1. Une machine de moulage par injection, comprenant :
un cylindre (41) qui chauffe un matériau de moulage fourni à partir d'un orifice de fourniture (41a) à la partie interne du cylindre (41) ;
une vis (43) qui est mobile vers l'avant et l'arrière et est rotative dans le cylindre (41) ;
une source d'entraînement (46) qui déplace la vis (43) vers l'avant et vers l'arrière ;
une unité de commande (90) qui commande la source d'entraînement (46) ;
un clapet anti-retour (48) qui est prévu sur une partie d'extrémité avant de la vis (43) et empêche le reflux du matériau de moulage depuis le côté avant de la vis (43) ; et
un détecteur de pression de liquide (49) qui détecte une pression de liquide d'un matériau de moulage fondu sur le côté arrière du clapet anti-retour (48) et le côté avant de l'orifice de fourniture (41a),
**caractérisée en ce que** l'unité de commande (90) est configurée pour commander la source d'entraînement (46) sur la base de la pression de liquide qui est détectée par le détecteur de pression de liquide (49) de telle sorte que la valeur détectée du détecteur de pression de liquide (49) est la même qu'une valeur définie du détecteur de pression de liquide (49).

2. La machine de moulage par injection selon la revendication 1, comprenant en outre :
un détecteur de pression (47) qui est prévu entre la vis (43) et la source d'entraînement (46), et
dans lequel l'unité de commande (90) est configurée pour corriger une valeur détectée du détecteur de pression (47) sur la base de la valeur détectée du détecteur de pression de liquide (49), et pour commander la source d'entraînement (46) de telle sorte que la valeur détectée corrigée du détecteur de pression (47) est identique à une valeur définie du détecteur de pression (49).

3. La machine de moulage par injection selon l'une quelconque des revendications 1 et 2,
dans laquelle un détecteur de pression (47) est prévu entre la vis (43) et la source d'entraînement (46), et
dans laquelle l'unité de commande (90) est configurée pour corriger la valeur définie du détecteur de pression (47) sur la base de la valeur détectée du détecteur de pression de liquide (49), et pour commander la source d'entraînement (46) de telle sorte que la valeur détectée du détecteur de pression (47) est identique à la valeur définie corrigée du détecteur de pression (49).

4. La machine de moulage par injection selon l'une quelconque des revendications 1 à 3,
dans laquelle un détecteur de pression (47) est prévu entre la vis (43) et la source d'entraînement (46), et
dans laquelle l'unité de commande (90) est configurée pour assurer la production d'un produit de moulage en commandant la source d'entraînement (46) sur la base de la valeur détectée du détecteur de pression (47), et pour stocker la valeur détectée du détecteur de pression de liquide (49).

5. La machine de moulage par injection selon l'une quelconque des revendications 1 à 4,
dans laquelle un détecteur de pression (47) est prévu entre la vis (43) et la source d'entraînement (46), et
dans laquelle l'unité de commande (90) est configurée pour calculer une relation entre une pression détectée par le détecteur de pression (47) et une pression détectée par le détecteur de pression de liquide (49).

6. La machine de moulage par injection selon l'une quelconque des revendications 1 à 5,
dans laquelle l'unité de commande (90) est configurée pour détecter la pression de liquide au moyen du détecteur de pression de liquide (49) pendant un processus de pression de maintien, et pour commander la source d'entraînement (46) sur la base de la pression de liquide détectée.

7. La machine de moulage par injection selon l'une quelconque des revendications 1 à 6,
dans laquelle l'unité de commande (90) est configurée pour détecter la pression de liquide au moyen du détecteur de pression de liquide (49) pendant un processus de plastification, et pour commander la source d'entraînement (46) sur la base de la pression de liquide détectée.

8. La machine de moulage par injection selon l'une quelconque des revendications 1 à 7,
dans laquelle l'unité de commande (90) est configurée pour utiliser la pression de liquide détectée par le détecteur de pression de liquide (49) pour assurer la commutation d'un processus de remplissage au processus de pression de maintien.
